# EUROPÄISCHE PATENTANMELDUNG

(11) **EP 1 093 206 A1**
(43) Veröffentlichungstag der Anmeldung: **18.04.2001**
(21) Anmeldenummer: 99120491.8
(22) Anmeldetag: 15.10.1999
(51) Int. Cl.: H02J 7/35

(54) **Verfahren zur Stromversorgung einer Pumpe mittels Solarzellen oder dergleichen**

(71) Anmelder: WKK-Elektronik GmbH, 35708 Haiger-Weidelbach (DE)
(72) Erfinder: Klingbeil, Thomas, 46240 Bottrop (DE)
(74) Vertreter: Stark, Walter, Dr.-Ing.

(57) **Zusammenfassung**

Die Erfindung betrifft ein Verfahren zur Stromversorgung zumindest einer Pumpe mittels Solarzellen oder dergleichen sowie eine Anordnung zur Stromversorgung zumindest einer Pumpe mittels Solarzellen oder dergleichen. Um ein von den Umweltbedingungen unabhängiges netzstromungebundenes Betreiben der Pumpe ohne weitere Maschinen oder dergleichen, wie z. B. einer Batterie oder einem Generator, zu ermöglichen und unnötige Stillstandzeiten der Pumpe zu vermeiden, soll die von den Solarzellen oder dergleichen erzeugte elektrische Energie von einer Schalteinrichtung mit Hysterese (Schmitt-Trigger) bei für das Betreiben oder Starten der Pumpe ausreichender Energie direkt an die Pumpe abgegeben werden und bei Unterschreiten der zum Betreiben der Pumpe erforderlichen Energie durch Unterbrechen der Verbindung zur Pumpe solange in eine Speichereinheit eingespeist werden, bis diese genügend Energie zum Starten der Pumpe gespeichert hat und diese gespeicherte Energie durch Wiederherstellen der Verbindung zur Pumpe dann an die Pumpe abgegeben wird bzw. es soll zwischen Solarzellen oder dergleichen und Pumpe eine Schalteinrichtung mit Hysterese (Schmitt-Trigger) geschaltet sein, die eingangsseitig mit den Solarzellen oder dergleichen verbunden sein und ausgangsseitig an die Pumpe angeschlossen sein, wobei parallel zu der Reihenschaltung von Schalteinrichtung und Pumpe eine Speichereinheit geschaltet ist.

## Beschreibung

Die Erfindung betrifft ein Verfahren zur Stromversorgung zumindest einer Pumpe mittels Solarzellen oder dergleichen.

Aus der Praxis sind verschiedenste Anwendungen bekannt, bei denen eine oder mehrere Pumpen durch Solarstrom, Wind-oder Wasserstrom oder dergleichen angetrieben wird. Dies ist insbesondere häufig der Fall, wenn durch dachseitig angeordnete Solarkollektoren zu erhitzendes Wasser für die Warmwasserversorgung oder Heizung von der Pumpe umgewälzt werden muss.

Nachteilig hierbei ist, dass bei geringer Stromleistung, z. B. wenn die Solarzellen, das Wind- oder Wasserrad oder dergleichen nicht angetrieben werden kann, bedecktem Wetter, wenig Wind oder geringer Wasserströmung die Pumpe nicht betrieben werden kann und insofern zur Nutzung des aufgeheizten Wassers eine separate Stromversorgung erforderlich ist. Auch aufgrund des erhöhten Strombedarfs der Pumpe beim Starten kann es nach Stillständen z. B. während der Nacht zu verzögertem Anlaufen der Pumpe kommen, da die Leistung der Energiequelle zwar zum Betreiben reichen würde, aber für das Starten nicht groß genug ist. Auch hierfür wäre eine zusätzliche Stromversorgung erforderlich, die jedoch entweder einen Netzstromanschluss, eine Starterbatterie oder einen Generator erfordert. Weiterhin ist aufgrund des zum Starten erforderlichen deutlich höheren Energiebedarfs ein Wiederanlaufen der Pumpe nach einmaligem Stillstand, z. B. in der Nacht, aufgrund dieser Starthürde erst zu einem Zeitpunkt möglich, an dem die Pumpe bereits seit einiger Zeit hätte aktiv sein können.

Aufgabe der Erfindung ist es, die vorgenannten Nachteile zu vermeiden und ein Verfahren zur Stromversorgung einer Pumpe mittels Solarzellen oder dergleichen anzugeben, das ein von den Umweltbedingungen unabhängiges netzstromungebundenes Betreiben der Pumpe ohne weitere Maschinen oder dergleichen, wie z. B. einer Batterie oder einem Generator, ermöglicht und unnötige Stillstandzeiten der Pumpe vermeidet.

Diese Aufgabe wird gelöst durch ein Verfahren zur Stromversorgung zumindest einer Pumpe mittels Solarzellen oder dergleichen, wobei die von den Solarzellen oder dergleichen erzeugte elektrische Energie von einer Schalteinrichtung mit Hysterese (Schmitt-Trigger) bei für das Betreiben oder Starten der Pumpe ausreichender Energie direkt an die Pumpe abgegeben wird und bei Unterschreiten der zum Betreiben der Pumpe erforderlichen Energie durch Unterbrechen der Verbindung zur Pumpe solange in eine Speichereinheit eingespeist wird, bis diese genügend Energie zum Starten der Pumpe gespeichert hat und diese gespeicherte Energie durch Wiederherstellen der Verbindung zur Pumpe dann an die Pumpe abgegeben wird. Hierdurch wird die zum Betreiben und/oder Starten nicht ausreichende Leistung ebenfalls genutzt, da diese quasi "gesammelt" wird und dann zum zumindest kurzfristigen Betreiben der Pumpe verwendet wird. Insofern kann die Pumpe auch bei für eine erforderliche Stromversorgung durch die Solarzellen oder dergleichen nicht ausreichende Wetterlage oder dergleichen ohne Netzstrom oder zusätzliche Batterie bzw. zusätzlichen Generator betrieben werden. Sofern nach dem Starten die von den Solarzellen erzeugte Energie für das Betreiben der Pumpe ausreicht, wird die Energie direkt an die Pumpe abgegeben, anderenfalls wird sie wieder an die Speichereinheit geleitet, so dass (zumindest) eine intermittierende Betriebsweise erfolgen kann.

Erfindungsgemäß kann als Speichereinheit ein Kondensator, insbesondere Elektrolytkondensator, insbesondere mit vorgeschalteter Ladeelektronik (3) verwendet werden, so dass trotz häufig wechselnder Lade- und Entladevorgänge ein langlebiger und wartungsfreier Energiespeicher verwendet wird.

Auch kann als Speichereinheit ein Akkumulator, insbesondere mit vorgeschalteter Ladeelektronik verwendet werden, so dass sowohl Platzbedarf als auch die Kosten des Energiespeichers gering sind.

Vorzugsweise kann als Schalteinrichtung ein Relais verwendet werden, so dass eine Unempfindlichkeit gegen insbesondere elektrische Störungen gewährleistet wird.

Weiterhin kann als Schalteinrichtung auch eine elektronische Schaltung, insbesondere ein Mikrocontroller verwendet werden, so dass auch die Steuerung weiterer Funktionen, wie z. B. die Ladeelektronik eines eventuellen Akkumulators oder dergleichen in ein Bauelement integriert werden kann.

Die Erfindung betrifft weiterhin eine Anordnung zur Stromversorgung zumindest einer Pumpe mittels Solarzellen oder dergleichen.

Nachteilig bei derartigen Anordnungen ist, dass sie zum Betreiben der Pumpe bei ungenügender Stromversorgung durch die Solarzellen oder dergleichen eine zweite Stromversorgung umfassen müssen, die entweder netzgebunden ist oder eine Batterie bzw. einen Generator oder dergleichen aufweist. Dies verhindert entweder eine Unabhängigkeit vom Stromnetz oder ist durch die ansonsten notwendige Batterie bzw. den ansonsten erforderlichen Generator aufwendig und kosten- sowie wartungsintensiv.

Da die zum Starten erforderliche Energie deutlich höher ist als der zum weiteren Betreiben der Pumpe nötige Energiebedarf, läuft die Pumpe nach einmaligem Stillstand, z. B. in der Nacht, aufgrund dieser Starthürde erst zu einem Zeitpunkt an, an dem sie bereits seit einiger Zeit hätte aktiv sein können. Auch ist aufgrund dieser Anlaufproblematik ein Betreiben bei geringerer Stromversorgung, z. B. aufgrund von schlechtem Wetter oder dergleichen kaum möglich.

Aufgabe der Erfindung ist es, die vorgenannten Nachteile zu vermeiden und eine Anordnung zur Stromversorgung zumindest einer Pumpe mittels Solarzellen oder dergleichen zu schaffen, die das ein von den Umweltbedingungen unabhängiges netzstromungebundenes Betreiben der Pumpe ohne weitere Maschinen oder dergleichen, wie z. B. einer Batterie oder einem Generator, ermöglicht und unnötige Stillstandzeiten der Pumpe vermeidet.

Diese Aufgabe wird gelöst durch eine Anordnung zur Stromversorgung zumindest einer Pumpe mittels Solarzellen oder dergleichen, bei der zwischen Solarzellen oder dergleichen und Pumpe eine Schalteinrichtung mit Hysterese (Schmitt-Trigger) geschaltet ist, die eingangsseitig mit den Solarzellen oder dergleichen verbunden ist und ausgangsseitig an die Pumpe angeschlossen ist, wobei parallel zu der Reihenschaltung von Schalteinrichtung und Pumpe eine Speichereinheit geschaltet ist. Hierdurch wird der von den Solarzellen oder dergleichen erzeugte Strom, sofern er nicht zum Betreiben und/oder Starten der Pumpe ausreicht, durch Unterbrechen der Verbindung zur Pumpe solange gespeichert, bis ein Starten der Pumpe durch Wiederherstellen der Verbindung mittels der Schalteinrichtung möglich ist. Sofern der von den Solarzellen erzeugte Strom zum (weiteren) Betreiben der Pumpe ausreicht, erfolgt die Stromversorgung bei entsprechend geschalteter Schalteinrichtung direkt von den Solarzellen oder dergleichen zur Pumpe, anderenfalls wird der Energiespeicher wie vorstehend beschrieben erneut geladen, so dass unter Umständen eine intermittierende Betriebsweise der Pumpe resultiert.

Erfindungsgemäß kann die Speichereinheit ein Kondensator, insbesondere Elektrolytkondensator, insbesondere mit vorgeschalteter Ladeelektronik (3) sein, so dass eine lange Lebensdauer und Wartungsfreiheit des Energiespeichers bei den häufig wechselnden Ladungs- und Entladungszuständen gewährleistet ist.

Auch kann die Speichereinheit ein Akkumulator, insbesondere mit vorgeschalteter Ladeelektronik sein, so dass der Energiespeicher klein und kostengünstig ist.

Bei einem bevorzugten Ausführungsbeispiel kann die Schalteinrichtung ein Relais sein, so dass eine insbesondere gegen elektrische Störungen unempfindliche Schalteinrichtung gegeben ist.

Auch kann die Schalteinrichtung eine elektronische Schaltung, insbesondere ein Mikrocontroller sein, so dass die Schaltvorgänge frei programmierbar sind und von dem Mikrocontroller noch weitere Steuerungsfunktionen, wie z. B. die Steuerung der Ladeelektronik bei Verwendung eines Akkumulators oder dergleichen übernommen werden können.

Im Folgenden werden in der Zeichnung dargestellte Ausführungsbeispiele der Erfindung erläutert. In allen Figuren werden für gleiche bzw. gleichartige Bauteile die gleichen Bezugszeichen verwendet.

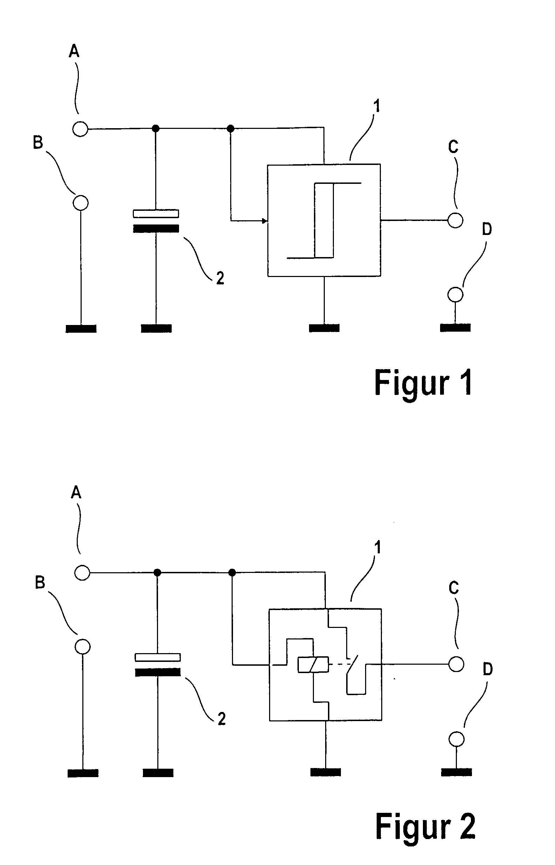

Fig. 1 zeigt eine Anordnung mit Eingangsklemmen A, B für in der Zeichnung nicht dargestellte Solarzellen oder dergleichen und Ausgangsklemmen C, D für zumindest eine ebenfalls nicht dargestellte Pumpe zur Stromversorgung der Pumpe mittels der Solarzellen.

Hierzu weist die Anordnung eine zwischen Solarzellen oder dergleichen und Pumpe geschaltete Schalteinrichtung 1 mit Hysterese (Schmitt-Trigger) auf, die eingangsseitig mit den Solarzellen oder dergleichen verbunden ist und ausgangsseitig an die Pumpe angeschlossen ist, wobei parallel zu der Reihenschaltung von Schalteinrichtung 1 und Pumpe eine Speichereinheit 2 geschaltet ist.

Sofern die von den Solarzellen oder dergleichen erzeugte Energie zum Betreiben der Pumpe nicht ausreicht, wird mittels der Schalteinrichtung 1 die Verbindung zur Pumpe unterbrochen und die Speichereinheit 2 geladen. Wenn die Ladung der Speichereinheit 2 und/oder die von den Solarzellen oder dergleichen erzeugte Energie zum Starten und Betreiben der Pumpe ausreicht, stellt die Schalteinrichtung 1 die Verbindung zur Pumpe wieder her, so dass an ihr auch die Spannung der geladenen Speichereinheit 2 anliegt.

Hierdurch wird bei lediglich geringer Energieerzeugung der Solarzellen oder dergleichen die Speichereinheit 2 durch den Betrieb der Pumpe wieder entladen und die Schalteinrichtung 1 unterbricht dann bei ungenügender Stromversorgung wiederum die Verbindung zur Pumpe.

Insofern kann es bei lediglich geringer Energieerzeugung der Solarzellen oder dergleichen zu einer intermittierenden Betriebsweise der Pumpe kommen, so dass auch geringe erzeugte Energien genutzt werden und bei gleichmäßiger mittlerer Energieerzeugung die kurzfristige höhere Energie zum Starten der Pumpe bereitgestellt werden kann, so dass die Pumpe z. B. bereits im Morgengrauen betrieben werden kann.

In Fig. 2 ist als Schalteinrichtung 1 ein Relais vorgesehen.

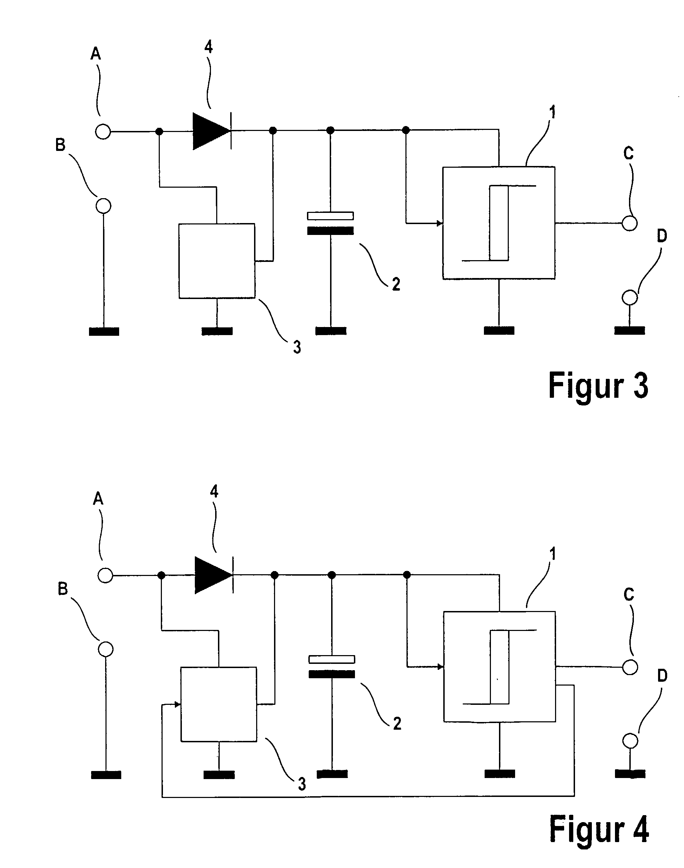

In Fig. 3 ist der Speichereinheit 2 eine Ladeelektronik 3 vorgeschaltet, die mit ihren eingangs- und ausgangsseitigen Anschlüssen parallel zur Speichereinheit 2 geschaltet ist, wobei Eingang und Ladeausgang in Reihe mit der Speichereinheit 2 und parallel zur einer Diode 4 geschaltet sind. Die Ladeelektronik 3 erzeugt eine höhere Spannung als die von den Solarzellen oder dergleichen gelieferte Spannung und ermöglicht so auch eine größere Spannung über der Speichereinheit 2. Die Diode 4 verhindert, dass die Speichereinheit 2 sich über die Solarzellen oder dergleichen entladen kann.

Fig. 4 zeigt den Gegenstand nach Fig. 3, wobei eine zusätzliche Steuerleitung zwischen Schalteinrichtung 1 und Ladeelektronik 3 vorgesehen ist, mit der die Ladeelektronik 3 beim Betrieb der Pumpe abgeschaltet wird, so dass die volle Energie für die Pumpe verfügbar ist und nicht ein Teil der Energie von der Ladeelektronik 3 aufgezehrt wird.

Sofern Ladeelektronik 3 und Schalteinrichtung 1 in einem gemeinsamen Bauteil, z. B. einen Mikrocontroller zusammengefasst sind, können in diesem Fall auch die für das Laden der Speichereinheit 2 zuständigen Bereiche des Mikrocontrollers beim Starten und Betreiben der Pumpe deaktiviert werden.

## Patentansprüche

1. Verfahren zur Stromversorgung zumindest einer Pumpe mittels Solarzellen oder dergleichen, dadurch gekennzeichnet, dass die von der Solarzelle oder dergleichen erzeugte elektrische Energie von einer Schalteinrichtung (1) mit Hysterese (Schmitt-Trigger) bei für das Betreiben oder Starten der Pumpe ausreichender Energie direkt an die Pumpe abgegeben wird und bei Unterschreiten der zum Betreiben der Pumpe erforderlichen Energie durch Unterbrechen der Verbindung zur Pumpe solange in eine Speichereinheit (2) eingespeist wird, bis diese genügend Energie zum Starten der Pumpe gespeichert hat und diese gespeicherte Energie durch Wiederherstellen der Verbindung zur Pumpe dann an die Pumpe abgegeben wird.

2. Verfahren nach Anspruch 1, dadurch gekennzeichnet, dass als Speichereinheit (2) ein Kondensator, insbesondere Elektrolytkondensator, insbesondere mit vorgeschalteter Ladeelektronik (3) verwendet wird.

3. Verfahren nach Anspruch 1, dadurch gekennzeichnet, dass als Speichereinheit (2) ein Akkumulator, insbesondere mit vorgeschalteter Ladeelektronik (3) verwendet wird.

4. Verfahren nach einem der Ansprüche 1 bis 3, dadurch gekennzeichnet, dass als Schalteinrichtung (1) ein Relais verwendet wird.

5. Verfahren nach einem der Ansprüche 1 bis 3, dadurch gekennzeichnet, dass als Schalteinrichtung (1) eine elektronische Schaltung, insbesondere ein Mikrocontroller verwendet wird.

6. Anordnung zur Stromversorgung zumindest einer Pumpe mittels Solarzellen oder dergleichen, dadurch gekennzeichnet, dass zwischen Solarzellen oder dergleichen und Pumpe eine Schalteinrichtung (1) mit Hysterese (Schmitt-Trigger) geschaltet ist, die eingangsseitig mit den Solarzellen oder dergleichen verbunden ist und ausgangsseitig an die Pumpe angeschlossen ist, wobei parallel zu der Reihenschaltung von Schalteinrichtung (1) und Pumpe eine Speichereinheit (2) geschaltet ist.

7. Anordnung nach Anspruch 6, dadurch gekennzeichnet, dass die Speichereinheit (2) ein Kondensator, insbesondere Elektrolytkondensator, insbesondere mit vorgeschalteter Ladeelektronik (3) ist.

8. Anordnung nach Anspruch 6, dadurch gekennzeichnet, dass die Speichereinheit (2) ein Akkumulator, insbesondere mit vorgeschalteter Ladeelektronik (3) ist.

9. Anordnung nach einem der Ansprüche 6 bis 8, dadurch gekennzeichnet, dass die Schalteinrichtung (1) ein Relais ist.

10. Anordnung nach einem der Ansprüche 6 bis 8, dadurch gekennzeichnet, dass die Schalteinrichtung (1) eine elektronische Schaltung, insbesondere ein Mikrocontroller ist.
